# EUROPEAN PATENT APPLICATION

(11) **EP 4 782 231 A2**
(43) Date of publication of application: **29.07.2026**
(21) Application number: 26154842.4
(22) Date of filing: 28.01.2026
(51) Int. Cl.: B60G 17/0165, B60G 17/0185

(54) **DRIVE MODE CONTROL**

(30) Priority: 28.01.2025 GB 202501180
(71) Applicant: Jaguar Land Rover Limited, Coventry, Warwickshire CV3 4LF (GB)
(72) Inventor: Ward, William, Coventry, CV3 4LF (GB); Wright, Jack, Coventry, CV3 4LF (GB); Boyd, Michael, Coventry, CV3 4LF (GB); Papanikolaou, Thomas, Coventry, CV3 4LF (GB)
(74) Representative: Jaguar Land Rover Patents Department

(57) **Abstract**

Aspects of the present invention relate to a control system (200, 400) for controlling drive modes of a vehicle (100), and to a related drive mode system (102), drive mode selection system (104), method (300, 500) and vehicle (100). The control system (200, 400) may be configured to determine a control signal (204, 404) in dependence on a temperature signal (206, 406) indicating that a temperature associated with a first system of the vehicle is above a first threshold and below a second threshold; and output the control signal (204, 404) wherein the control signal (204, 404) is indicative of an instruction to the first system to implement a default mode of a plurality of first system modes.

## Description

### TECHNICAL FIELD

The present disclosure relates to controlling drive modes of a vehicle. Aspects of the invention relate to a control system, to a drive mode system, to a drive mode selection system, to a method and to a vehicle.

### BACKGROUND

It is known to provide a vehicle that can provide a number of drive modes, for example comfort mode, eco mode, sport mode and the like. The driver may choose which drive mode to use or the vehicle may sense the terrain and choose a suitable drive mode to implement. A variety of systems and components throughout the vehicle may be operated in their own specific modes to implement the selected drive mode. Changing between modes and/or, in certain conditions, implementing a mode may lead to a component or system operating above its recommended thermal operating region. In this case, the effective implementation of a drive mode may be reduced.

It is an aim of the present invention to address one or more of the disadvantages associated with the prior art.

### SUMMARY OF THE INVENTION

Aspects and embodiments of the invention provide a control system, a drive mode system, a drive mode selection system, a method and a vehicle as claimed in the appended claims.

According to an aspect of the present invention there is provided a control system for a vehicle, for controlling a drive mode of a plurality of drive modes of the vehicle, the control system configured to: determine a control signal in dependence on a temperature signal indicating that a temperature associated with a first system of the vehicle is above a first threshold and below a second threshold; output the control signal wherein the control signal is indicative of an instruction to the first system to implement a default mode of a plurality of first system modes.

A drive mode system of a vehicle may provide a number of drive modes for implementation by various systems within the vehicle. The drive mode system may operate according to manual selection, where a user selects their preferred mode, or according to automatic selection, where the drive mode system itself selects a suitable mode, for example in dependence on terrain local to the vehicle. When the drive mode system is operating according to automatic selection, a control system within the drive mode system receives data on the current operating conditions on the vehicle and identifies a suitable drive mode to be implemented by the drive mode system. When using automatic mode selection, the drive mode system may change between modes often, depending on the changing operating conditions. A system within the drive system may experience a high operational temperature related to frequent automatic mode changes, and may begin to reach temperatures outside of its recommended operational temperature window. Certain systems or components within systems may be more susceptible to such mode-change temperature increases, while the remaining systems and their components can continue to operate within their operational temperature window. As such, the drive mode system itself may be largely able to continue operation even with very frequent mode changes. The control system described herein allows for a system experiencing a high operational temperature to be temporarily maintained in a default mode. In this way, the system is no longer changing modes and has an opportunity to reduce its operational temperature. When the operational temperature has reduced, the system may be permitted to change modes again.

According to another aspect of the invention, there is provided a control system for a vehicle, the vehicle comprising a drive mode selection system, a suspension system, and a suspension system controller, wherein the drive mode selection system is configured to select, in dependence on a sensed terrain type local to the vehicle, a drive mode of a plurality of drive modes of the vehicle, wherein the suspension system controller is configured to select, in dependence on the selected drive mode, a suspension system mode of a plurality of suspension system modes of the suspension system, and wherein the control system comprises one or more processors collectively configured to: receive a temperature signal indicative of a temperature associated with the suspension system; determine, in dependence on the temperature signal, a control signal; and output the control signal, wherein i) when the temperature signal indicates that the temperature associated with the suspension system is above a first threshold and below a second threshold greater than the first threshold, the control signal comprises a first control signal configured to cause the suspension system controller to select and maintain a default suspension mode independent of the selected drive mode, and ii) when the temperature signal indicates that the temperature associated with the suspension system is above the second threshold, the control signal comprises a second control signal configured to cause the drive mode selection system to select and maintain a default drive mode independent of the sensed terrain type.

In this way, the control system allows for the suspension system to stay in one mode and avoid the temperature-raising effects of changing mode. This in turn allows for reduced operation of the suspension system outside a preferred temperature operational window. Additionally, while the suspension system is inhibited from changing modes, the remaining systems can operate to implement the drive modes provided by the drive mode selection system. However, should the temperature of the suspension system be elevated further, the control system described herein can operate to keep the drive mode selection system in a one drive mode and so allow the suspension system to return to a preferred operating temperature.

In this way, the default mode may be a specifically pre-determined mode in which the suspension system should operate, or the default mode may be whatever mode is currently in use. Having the default mode be the current mode prevents any further change in the suspension mode and allows the temperature of the suspension system to begin to reduce as soon as default mode has been instructed.

The control system comprises one or more processors comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon so as to: receive the temperature signal indicative of the temperature associated with the suspension system; determine, in dependence on the temperature signal, the control signal; and output the control signal, wherein i) when the temperature signal indicates that the temperature associated with the suspension system is above the first threshold and below the second threshold greater than the first threshold, the control signal comprises the first control signal configured to cause the suspension system controller to select and maintain the default suspension mode independent of the selected drive mode, and ii) when the temperature signal indicates that the temperature associated with the suspension system is above the second threshold, the control signal comprises the second control signal configured to cause the drive mode selection system to select and maintain the default drive mode independent of the sensed terrain type.

In an embodiment, the first control signal is configured to cause the suspension system controller to maintain the current suspension mode. In this way, the default suspension mode is whichever suspension mode is in use at the time, and no further change of suspension mode, which may cause a further increase in operating temperature, will occur.

Optionally, the second control signal may be configured to cause the drive mode selection system to maintain the current drive mode. In this way, the default drive mode is whichever drive mode is in use at the time, and no further change of suspension mode, which may cause a further increase in operating temperature, will occur. The default mode of one or both of the suspension system and the drive mode system may be programmable, such that a user can choose whether the default mode is the current more or choose another mode to be implemented whenever mode changes are to be inhibited.

In an embodiment, the control signal is configured to receive a status signal indicative of a status of the drive mode selection system, and determine the control signal in dependence on the temperature signal and the status signal, wherein when the status signal indicates that the drive mode status selection system is operating according to user input, the control signal comprises a third control signal configured to cause the suspension system controller to select and maintain the suspension mode in dependence on the user selected drive mode. In this way, the control system does not alter the operation of the suspension system when the drive mode selection system is in operating in a user selection status. This may also be referred to as a manual selection status. In this way, the suspension system or the drive mode system can be instructed to implement normal temperature-control operation if the drive mode setting is not being controlled automatically by the drive mode selection system. The control system may be configured to output a control signal comprising control signals indicative of an instruction to exit the default suspension mode and to exit the default drive mode.

Optionally, when the temperature signal indicates that the temperature associated with the suspension system is below a third threshold lower than the first threshold, the control signal may be configured to comprise a fourth control signal indicative of an instruction to exit the default suspension or default drive mode. In this way, the suspension system or the drive system can be reverted to normal operation if the temperature associated with the suspension system returns to a preferred operating range. Having the third threshold lower than the first threshold allows for hysteresis and reduces overly frequent changes between default mode and full operation.

In an embodiment, the control signal is configured to receive a temperature signal indicative of a temperature associated with a pump of the suspension system. In this way, the default mode may be a specifically pre-determined mode in which the suspension system should operate, or the default mode may be whatever mode is currently in use. Having the default mode be the current mode prevents any further change in the suspension mode and allows the temperature of the suspension system to begin to reduce as soon as default mode has been instructed.

According to yet another aspect of the invention, there is provided a drive mode selection system of a vehicle, the drive mode selection system configured to select, in dependence on a sensed terrain type local to the vehicle, a drive mode of a plurality of drive modes of the vehicle, the drive mode selection system comprising the control system as described herein. Such a drive mode selection system allows the relevant system to avoid the temperature-raising effects of changing mode by staying in one mode.

According to a further aspect of the invention, there is provided a drive mode system of a vehicle, the drive mode system being configured to implement a plurality of drive modes of the vehicle, the drive mode system comprising the drive mode selection system as described herein, a suspension system, and a suspension system controller. In this way, the drive mode system allows for the implementation of its plurality of drive modes even when a system or component thereof may be operating outside a preferred temperature operating range.

In an embodiment, the drive mode system is configured to implement, in dependence on receipt of the first control signal, a predetermined default suspension mode. The suspension system may be configured to store a preferred default suspension mode, such that on receipt of the first inhibit signal, the suspension system automatically implements the predetermined preferred suspension mode.

Optionally, the drive mode system may be configured to maintain, in dependence on receipt of the first control signal, the current suspension mode. In this way, the suspension system may not have a specific default suspension mode but may simply avoid any further changes in the suspension mode after receiving the first inhibit signal.

In an embodiment, the drive mode system is configured to implement, in dependence on receipt of the second control signal, a default drive mode. The drive system may be configured to store a preferred default drive mode, such that on receipt of the second inhibit signal, the drive mode system automatically implements the predetermined preferred drive mode. The drive mode system may be configured to maintain, in dependence on receipt of the second control signal, the current drive mode.

Optionally, the temperature signal may be indicative of a temperature of a pump of the suspension system. In this way, if the operating temperature of a particular component of the suspension system is sensitive to suspension mode changes, its temperature can be used to provide for improved operation of the suspension system. The component may be a pump, such as a high-speed damping fluid pump.

In an embodiment, the drive mode system comprises a plurality of systems configured to implement a plurality of system modes under drive mode system control, and for each system, at least one of the plurality of system modes corresponds to at least one of the plurality of drive modes, wherein, when the first control signal is output, the drive mode system is configured to implement the plurality of drive modes via the respective system modes in the systems of the plurality of systems other than the suspension system. In this way, the drive system can continue to provide the drive modes to the vehicle via the remaining systems when the suspension system is inhibited by the control system.

According to a still further aspect of the invention, there is provided a method for a vehicle (100), the vehicle comprising a drive mode selection system, a suspension system, and a suspension system controller, wherein the drive mode selection system is configured to select, in dependence on a sensed terrain type local to the vehicle, a drive mode of a plurality of drive modes of the vehicle, wherein the suspension system controller is configured to select, in dependence on the selected drive mode, a suspension pump mode of a plurality of suspension pump modes of the suspension system, and wherein the method comprises receiving a temperature signal indicative of a temperature associated with the suspension system; determining, in dependence on the temperature signal, a control signal; and outputting the control signal, wherein i) when the temperature signal indicates that the temperature associated with the suspension system is above a first threshold and below a second threshold greater than the first threshold, the control signal comprises a first control signal configured to cause the suspension system controller to select and maintain a default suspension mode independent of the selected drive mode, and ii) when the temperature signal indicates that the temperature associated with the suspension system is above the second threshold, the control signal comprises a second control signal configured to cause the drive mode selection system to select and maintain a default drive mode independent of the sensed terrain type.

According to an additional aspect of the invention, there is provided a computer readable instructions which, when executed by one or more processors, cause the one or more processors to perform the methods described herein.

According to a yet further aspect of the invention, there is provided a vehicle comprising the drive mode system as described herein or the control system as described herein. Such a vehicle can operate in a variety of drive modes and change frequently between modes for prolonged periods.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Fig. 1(a) shows a vehicle in accordance with an embodiment of the invention;
Fig. 1(b) shows a block diagram of the vehicle of Fig. 1(a);
Fig. 2 shows a block diagram of a control system according to an embodiment of the invention;
Fig. 3 shows a flow chart of a method according to an embodiment of the invention;
Fig. 4 shows a block diagram of another control system according to an embodiment of the invention;
Fig. 5 shows a flow chart of a further method according to an embodiment of the invention;
Fig. 6 shows a further block diagram of the control system according to Fig. 4;
Fig. 7 shows a flow chart of a method according to an embodiment of the invention; and
Fig. 8 is a block diagram of a suspension system which is controlled according to an embodiment of the invention.

### DETAILED DESCRIPTION

It is known in vehicles to provide various different subsystems which can operate in different configurations so as to suit different driving conditions. By way of example, automatic transmissions can be controlled in a variety of modes (e.g. sport, manual, winter, or economy) in which changes between gear ratios and other subsystem control parameters are modified so as to suit the conditions of the terrain or the particular taste of the driver. It is also known to provide vehicle suspensions with, for example, on-road and off-road modes. Stability control systems can be operated at reduced activity so as to give the driver more direct control, and power steering systems can be operated in different modes to provide a varying level of assistance depending on driving conditions. Vehicles may comprise one or more control systems that enable the implementation of an operating mode for the or each vehicle subsystem that is suitable for the driving conditions in which the vehicle is travelling. The various operating modes for the subsystems may be grouped to provide an overall mode for the vehicle. Such an overall mode may be referred to as a drive mode or a driving mode. A vehicle system may be configured to implement one of a number of different drive modes, where such a system may be referred to as a drive mode system. For each drive mode, the various vehicle subsystems may be operated in a manner appropriate to the corresponding terrain. A drive mode selection system may be used to select the appropriate drive mode to implement.

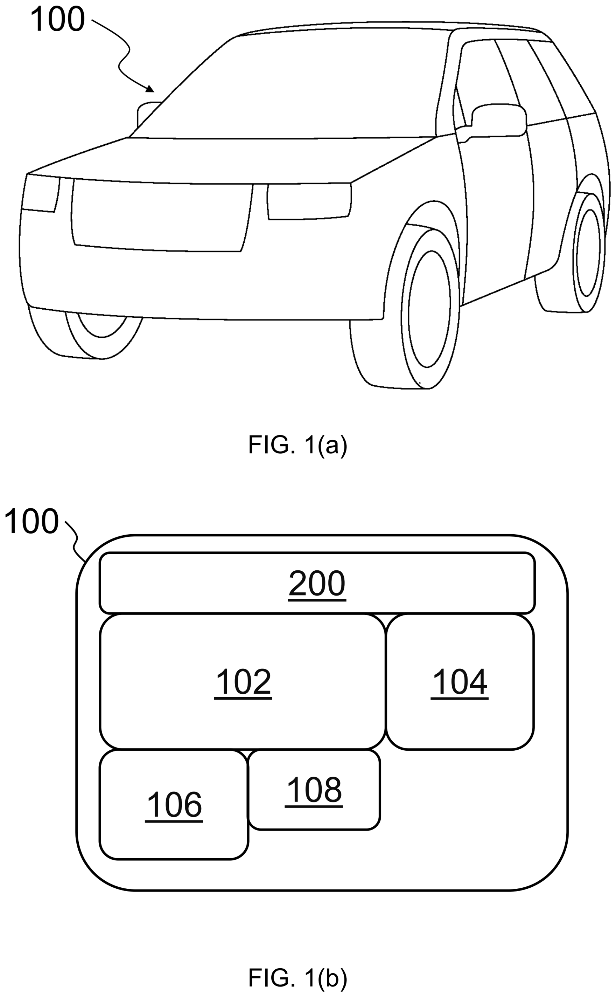

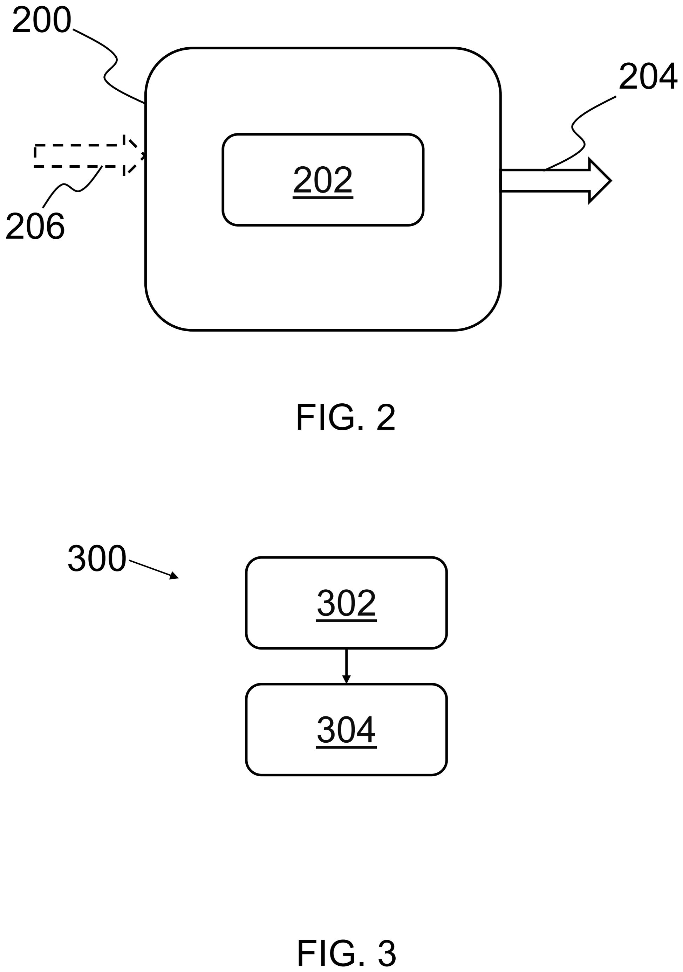

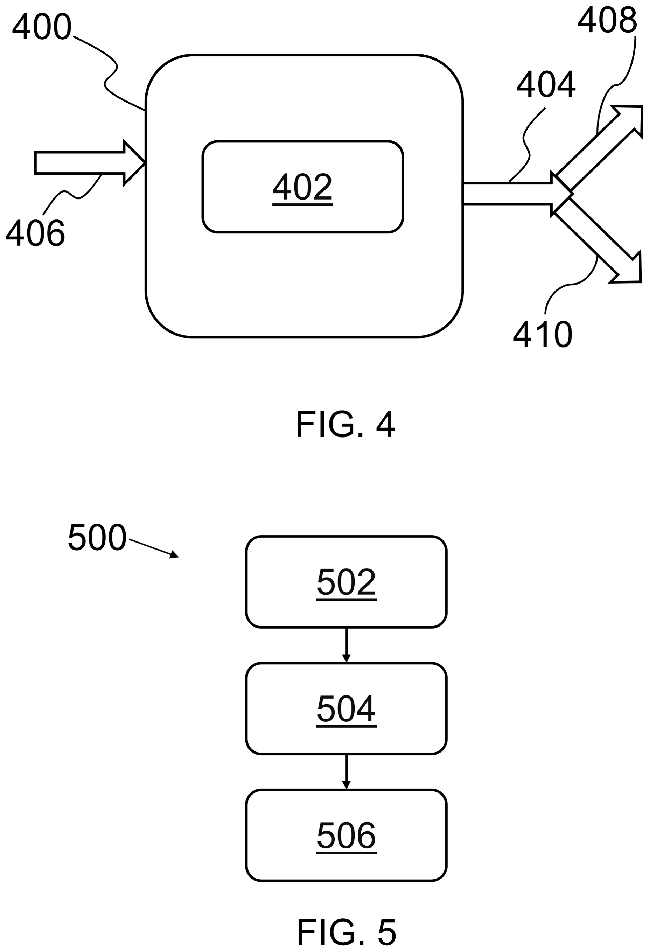

A vehicle 100 in accordance with an embodiment of the present invention is described herein with reference to the accompanying Figs. 1(a) and (b). The vehicle 100 may include an electric drivetrain (not shown), and in particular the vehicle 100 may be an electric vehicle, a battery electric vehicle (BEV), or a hybrid vehicle (e.g., a plug-in hybrid vehicle or a mild hybrid vehicle). The vehicle 100 may be intended to be suitable for off-road use, that is for use on terrains other than regular road surfaces, such as tarmac or asphalt roads. The vehicle 100 comprises a number of systems and modules (not shown), such as an engine management system, a chassis system, a transmission system, a steering system, and a brake system. Each of these may have an associated control system. The vehicle 100 includes a drive mode system 102, a drive mode selection system 104, a suspension system 106, a suspension system controller 108, and a control system 200, 400 which will be described in more detail herein in relation to Figs. 2 and 4. The drive mode system 102 may include the drive mode selection system 104, suspension system 106 and the control system 200, 400, or some or all of these systems may be separate systems. The suspension system 106 may be a hydraulic suspension system.

The drive mode system 102 is configured to implement a plurality of drive modes of the vehicle 100. The drive modes may include sports mode, eco mode, comfort mode, and so on. The drive mode selection system 104 is configured to select, in dependence on a sensed terrain type local to the vehicle 100, a drive mode of the plurality of drive modes. The vehicle 100 comprises a plurality of sensors (not shown) which may provide signals that are representative of a variety of different parameters associated with vehicle motion and status. The sensors (not shown) on the vehicle include, but are not limited to, sensors which provide continuous sensor outputs, including wheel speed sensors, an ambient temperature sensor, an atmospheric pressure sensor, tyre pressure sensors, yaw sensors to detect yaw, roll and pitch of the vehicle, a vehicle speed sensor, a longitudinal acceleration sensor, an engine torque sensor (or engine torque estimator), a steering angle sensor, a steering wheel speed sensor, a gradient sensor (or gradient estimator), a lateral acceleration sensor on the stability control system (SCS), a brake pedal position sensor, an acceleration pedal position sensor and longitudinal, lateral, vertical motion sensors. The vehicle 100 is also provided with a plurality of sensors which provide discrete sensor outputs, including a cruise control status signal (ON/OFF), a transfer box status signal (whether the gear ratio is set to a HI range or a LO range), a Hill Descent Control (HDC) status signal (ON/OFF), a trailer connect status signal (ON/OFF), a signal to indicate that the Stability Control System (SCS) has been activated (ON/OFF), a windscreen wiper signal (ON/OFF), air suspension status (HI/LO), and a Dynamic Stability Control (DSC) signal (ON/OFF). An electronic power assisted steering unit (ePAS unit) of the vehicle 100 may also provide a signal to indicate the steering force that is applied to the wheels (steering force applied by the driver combined with steering force applied by the ePAS system).

A number of systems of the vehicle 100 may be involved in implementing the selected drive mode. Each of the systems involved in implementing the drive modes may have a number of components to be controlled. Each of these systems may have a plurality of system modes to correspond to the drive modes, and some or all components may have a mode of operation corresponding to a drive mode or system mode. The suspension system 106 may have a plurality of suspension system modes of operation, which may be selected by the suspension system controller 108, in accordance with the drive mode instructed by the drive mode selection system 104. In an example, the components of the suspension system include a suspension pump. The suspension pump may have a plurality of suspension pump modes of operation, which may be selected by the suspension system controller, in accordance with the drive mode instructed by the drive mode selection system 104.

At times, the drive mode selection system 104 may change between modes often, depending on changing terrain. A system implementing the drive modes, such as the suspension system, may experience a high operational temperature related to frequent automatic mode changes, and may begin to reach temperatures outside of its recommended operational temperature window. Certain systems, or components within systems, may be more susceptible to such mode-change temperature increases, while the remaining systems and their components can continue to operate within their operational temperature window. As such, the drive mode system itself may be largely able to continue to provide drive mode changes even with very frequent mode changes. However, in prior art systems, if a component within the systems implementing the drive modes has a temperature above a defined operating range, then that system may be deactivated until the temperature of the component returns to a defined operating range. As such, the implementation of drive modes may be severely impacted if one of the relevant systems is no longer contributing thereto.

With reference to Fig. 2, there is illustrated the control system 200 for the vehicle 100. The control system 200 may be comprised within or operate in conjunction with at least one of the drive mode system 102 and the drive mode selection system 104. The control system 200 comprises one or more processors illustrated herein for simplicity as a single component 202. The control system 200 is configured to determine a control signal 204 in dependence on a temperature signal 206 indicating that a temperature associated with a first system is above a first threshold and below a second threshold. The first system may be a system comprised within the drive mode system 102 or related thereto. The control system 200 is configured to output the control signal 204 wherein the control signal 204 is indicative of an instruction to the first system to implement a default mode of a plurality of first system modes. The default mode may, for example, be a pre-identified default mode or the default mode may be the current mode such that no further changes of mode occur.

With reference to Fig. 3, there is illustrated a method 300 for a vehicle 100. The method 300 may be implemented by the control system 200 described herein in relation to Fig. 2, but is not limited thereto. The method 300 comprises, at block 302, determining a control signal in dependence on a temperature signal indicating that a temperature associated with a first system is above a first threshold and below a second threshold. The method 300 comprises, at block 304, outputting the control signal wherein the control signal is indicative of an instruction to the first system to implement a default mode of a plurality of first system modes.

In this way, a system experiencing a high operational temperature can be temporarily maintained in a default mode. In this way, the system is no longer changing modes and has an opportunity to reduce its operational temperature. When the operational temperature has reduced, the system may be permitted to change modes again.

Referring now to Fig. 4, there is shown a block diagram of a control system 400 according to an embodiment of the invention. The control system 400 is suitable for use in the vehicle 100 described herein. The control system 400 comprises one or more processors, shown for convenience as a single processor 402. The processor 402 is configured to receive a temperature signal 406 indicative of a temperature associated with the suspension system 106. The temperature signal 406 may be indicative of a temperature associated with a component of the suspension system 106, such as a pump. The processor 402 is configured to determine, in dependence on the temperature signal 406, a control signal 404. The processor 402 is configured to output the control signal 404. When the temperature signal 406 indicates that the temperature associated with the suspension system 106 is above a first threshold and below a second threshold greater than the first threshold, the control signal 404 comprises a first control signal 408 configured to cause the suspension system controller 108 to select and maintain a default suspension mode independent of the selected drive mode. When the temperature signal 406 indicates that the temperature associated with the suspension system 106 is above the second threshold, the control signal 404 comprises a second control signal 410 configured to cause the drive mode selection system 104 to select and maintain a default drive mode independent of the sensed terrain type.

The control system 400 allows for the suspension system 106 to stay in one mode and avoid the temperature-raising effects of changing mode. This in turn reduces operation of the suspension system 106 outside a preferred temperature operational window. Additionally, while the suspension system 106 is inhibited from changing modes, it is still operational and implementing the default suspension mode. The remaining systems of the vehicle can operate to implement the drive modes according to the drive mode selection system. However, if the temperature of the suspension system becomes elevated further, the control system 400 described herein can operate to keep the drive mode system in a single drive mode and so allow the suspension system to return to a preferred operating temperature. Again, in this case, the suspension system and the other systems relevant to the implementing the drive modes remain operational. The first threshold and second threshold may be calibratable to allow for efficient and reliable operation of the drive modes and the transitions therebetween.

The control system 200 as illustrated in Fig. 4 comprises one processor 402, although it will be appreciated that this is merely illustrative. The processor 402 comprises processing means and memory means. The processing means may be one or more electronic processing device which operably executes computer-readable instructions. The memory means may be one or more memory device. The memory means is electrically coupled to the processing means. The memory means is configured to store instructions, and the processing means is configured to access the memory means and execute the instructions stored thereon.

The processor 402 comprises an input means and an output means. The input means may comprise an electrical input of the processor 402. The output means may comprise an electrical output of the processor 402.

Referring now to Fig. 5, there is shown a flow chart of a method, indicated generally by the reference numeral 500, for the vehicle 100. The method 500 may be performed by the control system, 200, 400 but is not limited thereto. The method 500 comprises, at block 502, receiving a temperature signal indicative of a temperature associated with the suspension system. At block 504, the method comprises determining, in dependence on the temperature signal, a control signal. The method 500 comprises, at block 506, outputting the control signal. In the case where the temperature signal indicates that the temperature associated with the suspension system is above a first threshold and below a second threshold greater than the first threshold, the control signal comprises a first control signal configured to cause the suspension system controller to select and maintain a default suspension mode independent of the selected drive mode. In the case where the temperature signal indicates that the temperature associated with the suspension system is above the second threshold, the control signal comprises a second control signal configured to cause the drive mode selection system to select and maintain a default drive mode independent of the sensed terrain type.

A system operating to implement a selected drive mode, such as the suspension system, may be configured with a predetermined action to implement the default mode in response to the first control signal 408. In some examples, the system may switch to a predefined mode, while in other examples, the system may remain in the whatever the current mode is so as avoid any further changes in mode at that time. In an example, the first control signal 408 is configured to cause the suspension system controller to maintain the current suspension mode. In this way, the suspension system does not change modes in response to the first control signal 408. The default mode to be switched to may change in dependence on the mode in operation that the time of the first control signal.

In a similar arrangement, the drive mode system 102 may be configured with a predetermined action to implement the default mode in response to the second control signal 410. In some examples, the drive mode system may switch to a predefined drive mode, while in other examples, the drive mode system may remain in the whatever the current mode is so as avoid any further changes in mode at that time. In an example, the second control signal is configured to cause the drive mode selection system to maintain the current drive mode. In this way, the drive mode system does not change modes in response to the second control signal 410. The default drive mode to be switched to may change in dependence on the drive mode in operation that the time of the second control signal.

When the temperature of the system or controller has reduced, the drive mode system may return to full operation wherein the system in question operates to implement the system mode that corresponds to the drive mode selected by the drive mode selection system 104. In an example, when the temperature signal indicates that the temperature associated with the suspension system 106 is below a third threshold lower than the first threshold, the control signal 408 is configured to comprise a fourth control signal indicative of an instruction to exit the default suspension or default drive mode.

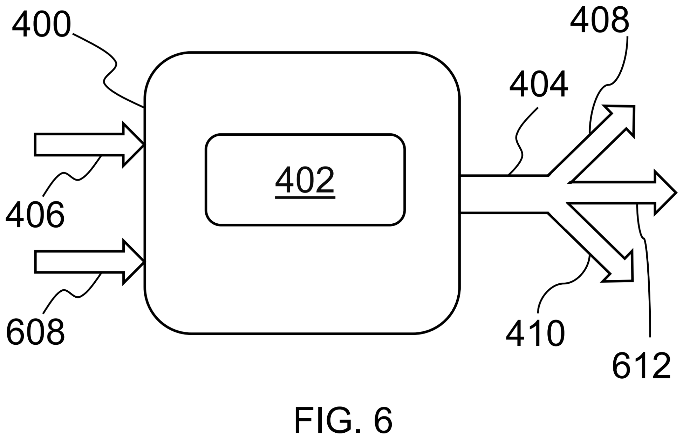

The drive mode selection system 104 has a number of possible operational statuses, including automatic status and manual status. In automatic status, the drive mode selection system 104 is configured to determine the drive mode in dependence on a sensed terrain type local to the vehicle 100. In manual status, the drive mode selection system 104 does not choose the drive mode according to the sensed terrain, but according to user input. Referring now to Fig. 6, there is shown another example of the control system 400. The drive mode selection system 104 is configured to output a status signal 608 indicative of a status thereof. The control system 400 is configured to receive the status signal 608. When the status signal 608 indicates that the drive mode selection system 104 is operating according to user input, the control signal 408 comprises a third control signal 612 configured to cause the suspension system controller 108 to select and maintain the suspension mode in dependence on the user selected drive mode.

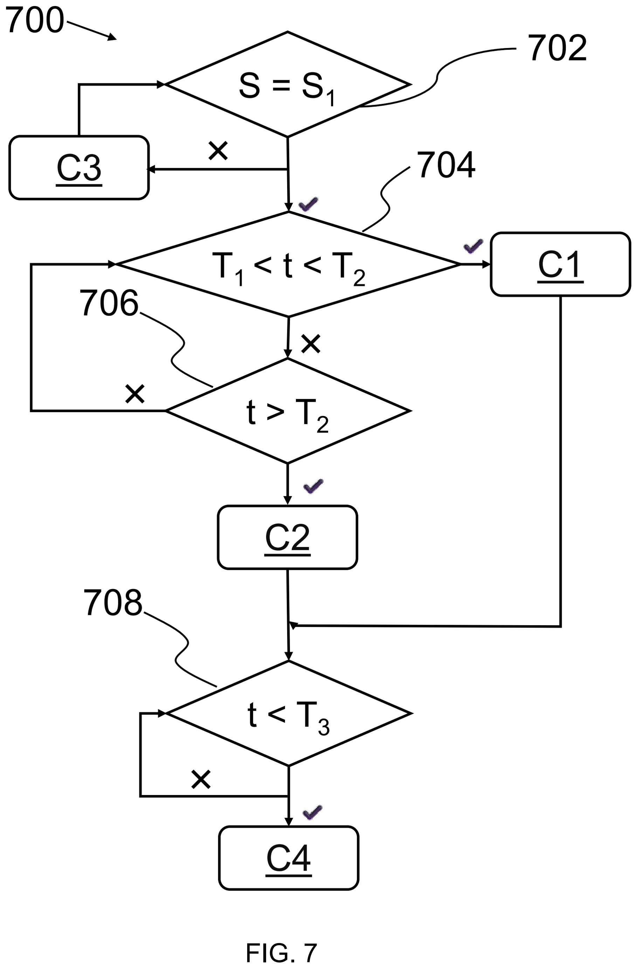

Referring now to Fig. 7, there is shown a flow chart of method 700 according to an embodiment of the invention. At block 702, the method checks if the status, S, of the drive mode selection system 104 is status S₁, namely that the drive mode selection system 104 is operating according to automatic selection. If the drive mode selection system 104 is not (X) in status S₁, the method 700 outputs the third control signal C3, configured to cause the suspension system controller 108 to select and maintain the suspension mode in dependence on the user selected drive mode. If the drive mode selection system 104 is (✔) in status S₁, the method 700 proceeds to block 704, where it is determined if the temperature indicated by the temperature signal for the suspension system is between a first threshold temperature and a second threshold temperature greater than the first threshold temperature. If this is determined to be yes (✔), the method 700 proceeds to output the first control signal C1. If the result at block 704 is no (×), the method 700 proceeds to block 706. At block 706, the method 700 determines if the temperature indicated by the temperature signal is greater than the second threshold. If the answer at block 706 is yes (✔), the method 700 outputs the second control signal C2. If after outputting the first control signal C1 or second control signal C2, the method determines that the temperature is (✔) below a third threshold lower than the first threshold, the method 700 outputs the fourth control signal C4. While the blocks of the method 700 are shown to flow from one decision and/or action to another, it will be understood that this may be merely illustrative, and that some or all of the actions and decisions may occur in different orders or substantially simultaneously.

While the drive mode system 102, the drive mode selection system 104, and the control system 200, 400 may be separate systems that interact with each other, in an example, the drive mode system 102 comprises the drive mode selection system 104 and the control system 200, 400. The control system 200, 400 may be comprised within the drive mode selection system 104. The drive mode system 102 may interact with a plurality of systems within the vehicle 100 to implement the various drive modes. The drive mode system 102 may comprise one or more of the systems used for implementing the plurality of drive modes. Each such system may have a plurality of operational modes, wherein at least one of the plurality of system modes corresponds to at least one of the plurality of drive modes. In an example, the drive mode system 102 comprises the suspension system 106 and the suspension system controller 108. The drive mode system 102 may be configured to implement, in dependence on receipt of the first control signal, a predetermined default suspension mode. The suspension system 106 may be configured to store a preferred default suspension mode, such that on receipt of the first control signal, the suspension system 106 automatically implements the predetermined preferred suspension mode. When the first control signal is output, the drive mode system 102 is configured to implement the plurality of drive modes via the respective system modes in the systems of the plurality of systems other than the suspension system. In this way, drive modes may continue to be implemented even if one of the related systems or components is operating outside its preferred temperature window. The drive mode system 102 may be configured to implement, in dependence on receipt of the second control signal, a default drive mode. The drive mode system 102 may be configured to store a preferred default drive mode, such that on receipt of the second control signal, the drive mode system 102 automatically implements the predetermined preferred drive mode. The drive mode system 102 may be configured to maintain, in dependence on receipt of the second control signal, the current drive mode.

While the disclosure refers to the suspension system, it will be appreciated that the invention of the disclosure may be applied to any system or component of the vehicle 100 that is used in implementing the various drive modes provided by the drive mode system 104 of the vehicle 100. In particular, it will be appreciated that a system or component that is operated as part of changing drive mode, may be subject to increased temperature if the drive mode is changing frequently. This may be further exacerbated if the component or system in question is also working while a drive mode is active. In a particular example, components of the suspension system may be particularly subject to a raised operational temperature while implementing a drive mode.

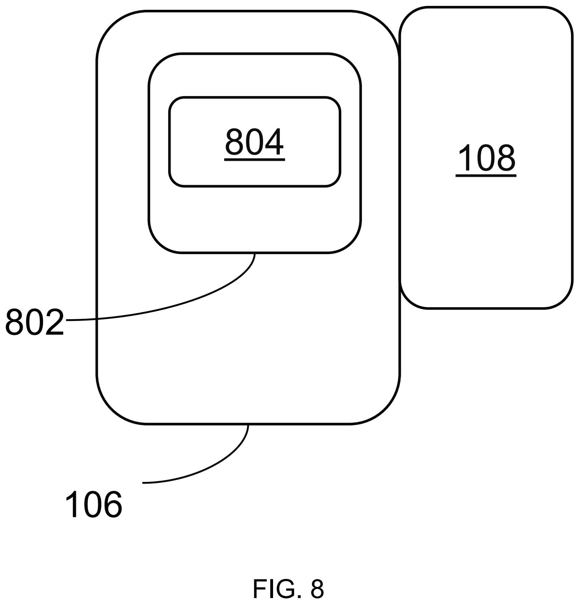

Referring now to Fig. 8, there is shown a block diagram of the suspension system 106 and the suspension system controller 108. The suspension system may be an air suspension system. The suspension system 106 may comprise one or more pumps, including a damping fluid pump 804, which may form part of an Automatic Pressure Maintenance Unit (APMU) 802. In an example, the temperature signal 206, 406 may be indicative of a temperature of a pump of the suspension system 106. In particular, the temperature signal 206, 406 may be indicative of a temperature of a damping fluid pump 804 of the APMU 802.

According to the invention, a tiered system of protection against overheating may be applied within complex systems. Consider as an example, a system having a number of sub-systems, which may have further sub-systems in turn, and the sub-systems have one or more components. According to the invention, as a first tier, a component may switch to a default mode at a first temperature, with the component's sub-system continuing to operate according to the selected mode. If the temperature continues to rise and reaches a second threshold then, as a second tier, the sub-system may be switched to a default mode, while the remaining sub-systems of the system continue to operate according to the selected drive mode. Next, as a third tier, if the temperature continues to rise to a third temperature, the full system may be put into a default mode. This arrangement provides for prolonged operation of the system before elevated operating temperatures lead to the whole system being put in a default mode, derated, or another reduction in the operation in the whole system.

The methods described herein may be implemented by computer readable instructions which, when executed by one or more processors, cause the one or more processors to perform the methods. The computer readable instructions may be stored on a memory associated with the one or more processors.

It will be appreciated that various changes and modifications can be made to the present invention without departing from the scope of the present application.

## Claims

1. A control system for a vehicle, the vehicle comprising a drive mode selection system, a suspension system, and a suspension system controller,
wherein the drive mode selection system is configured to select, in dependence on a sensed terrain type local to the vehicle, a drive mode of a plurality of drive modes of the vehicle,
wherein the suspension system controller is configured to select, in dependence on the selected drive mode, a suspension system mode of a plurality of suspension system modes of the suspension system, and
wherein the control system comprises one or more processors collectively configured to:
receive a temperature signal indicative of a temperature associated with the suspension system;
determine, in dependence on the temperature signal, a control signal; and
output the control signal,
wherein
i) when the temperature signal indicates that the temperature associated with the suspension system is above a first threshold and below a second threshold greater than the first threshold, the control signal comprises a first control signal configured to cause the suspension system controller to select and maintain a default suspension mode independent of the selected drive mode, and
ii) when the temperature signal indicates that the temperature associated with the suspension system is above the second threshold, the control signal comprises a second control signal configured to cause the drive mode selection system to select and maintain a default drive mode independent of the sensed terrain type.

2. A control system as claimed in claim 1 wherein the first control signal is configured to cause the suspension system controller to maintain the current suspension mode.

3. A control system as claimed in claim 1 or 2 wherein the second control signal is configured to cause the drive mode selection system to maintain the current drive mode.

4. A control system as claimed in any preceding claim configured to receive a status signal indicative of a status of the drive mode selection system, and determine the control signal in dependence on the temperature signal and the status signal,
wherein when the status signal indicates that the drive mode status selection system is operating according to user input, the control signal comprises a third control signal configured to cause the suspension system controller to select and maintain the suspension mode in dependence on the user selected drive mode.

5. A control system as claimed in any preceding claim wherein, when the temperature signal indicates that the temperature associated with the suspension system is below a third threshold lower than the first threshold, the control signal is configured to comprise a fourth control signal indicative of an instruction to exit the default suspension or default drive mode.

6. A control system as claimed in any preceding claim configured to receive a temperature signal indicative of a temperature associated with a pump of the suspension system.

7. A drive mode selection system of a vehicle, the drive mode selection system configured to select, in dependence on a sensed terrain type local to the vehicle, a drive mode of a plurality of drive modes of the vehicle, the drive mode selection system comprising the control system of any preceding claim.

8. A drive mode system of a vehicle, the drive mode system being configured to implement a plurality of drive modes of the vehicle, the drive mode system comprising the drive mode selection system of claim 7, a suspension system, and a suspension system controller.

9. A drive mode system as claimed in claim 8 configured to implement, in dependence on receipt of the first control signal, a predetermined default suspension mode.

10. A drive mode system as claimed in claim 8 or 9 configured to maintain, in dependence on receipt of the first control signal, the current suspension mode.

11. A drive mode system as claimed in any of claims 7 to 10 configured to implement, in dependence on receipt of the second control signal, a default drive mode.

12. A drive mode system as claimed in any of claims 7 to 11 wherein the temperature signal is indicative of a temperature of a pump of the suspension system.

13. A drive mode system as claimed in any of claims 7 to 12 comprising a plurality of systems configured to implement a plurality of system modes under drive mode system control, and for each system, at least one of the plurality of system modes corresponds to at least one of the plurality of drive modes, wherein, when the first control signal is output, the drive mode system is configured to implement the plurality of drive modes via the respective system modes in the systems of the plurality of systems other than the suspension system.

14. A vehicle comprising the drive mode system of claims 7 to 13 or the control system of claims 1 - 6.

15. A method for a vehicle, the vehicle comprising a drive mode selection system, a suspension system, and a suspension system controller,
wherein the drive mode selection system is configured to select, in dependence on a sensed terrain type local to the vehicle, a drive mode of a plurality of drive modes of the vehicle,
wherein the suspension system controller is configured to select, in dependence on the selected drive mode, a suspension pump mode of a plurality of suspension pump modes of the suspension system, and
wherein the method comprises
receiving a temperature signal indicative of a temperature associated with the suspension system;
determining, in dependence on the temperature signal, a control signal; and
outputting the control signal,
wherein
i) when the temperature signal indicates that the temperature associated with the suspension system is above a first threshold and below a second threshold greater than the first threshold, the control signal comprises a first control signal configured to cause the suspension system controller to select and maintain a default suspension mode independent of the selected drive mode, and
ii) when the temperature signal indicates that the temperature associated with the suspension system is above the second threshold, the control signal comprises a second control signal configured to cause the drive mode selection.
